# EUROPÄISCHE PATENTSCHRIFT

(11) **EP 2 692 038 B1**
(45) Veröffentlichungstag und Bekanntmachung des Hinweises auf die Patenterteilung: **14.12.2016**
(21) Anmeldenummer: 12715581.0
(22) Anmeldetag: 17.03.2012
(51) Int. Cl.: H02J 7/00

(54) **SCHALTUNGSANORDNUNG ZUM LADUNGSAUSGLEICH IN EINER AKKUBLOCKANORDNUNG**
CIRCUIT ASSEMBLY FOR EQUALIZING CHARGE IN A BATTERY BLOCK ASSEMBLY
AGENCEMENT DE COMMUTATION POUR LA COMPENSATION DE LA CHARGE DANS UN AGENCEMENT DE BATTERIES D'ACCUMULATEURS

(30) Priorität: 30.03.2011 DE 102011015523
(43) Veröffentlichungstag der Anmeldung: 05.02.2014
(73) Patentinhaber: ads-tec GmbH, 72622 Nürtingen (DE)
(72) Erfinder: NATOUR, Ali, 73269 Hochdorf (DE); GANCHEV, Dimitar, 70188 Stuttgart (DE); FEDERLE, Johannes, 72108 Rottenburg (DE)
(74) Vertreter: Wasmuth, Rolf
(86) Internationale Anmeldenummer: PCT/EP2012/001193
(87) Internationale Veröffentlichungsnummer: WO 2012/130400

(56) Entgegenhaltungen:
- EP-A2- 1 912 307
- EP-A2- 2 075 892
- US-A1- 2002 109 482
- US-A1- 2004 217 735
- US-A1- 2005 017 682
- US-A1- 2010 231 166
- US-A1- 2010 295 510

## Beschreibung

Die Erfindung betrifft eine Schaltungsanordnung zum Austausch elektrischer Ladung zwischen den Zellen einer Akkublockanordnung nach dem Oberbegriff des Anspruchs 1.

Ein derartiger Akkublock wird über seine äußeren Anschlussklemmen mit einer Vielzahl weiterer Akkublocks in einer Akkublockanordnung zusammengeschaltet, um elektrische Energiespeicher ausreichender Größe und Spannung bereitzustellen. Die Spannungsbereiche können mehrere Hundert Volt betragen; die Kapazität derartiger Akkublockanordnungen kann beliebig gestaltet werden.

Zur Erzielung hoher Ausgangsspannungen müssen einzelne Zellen in einem Akkublock sowie mehrere Akkublocks in einer Akkublockanordnung in Reihe geschaltet werden. Die Spannung und Kapazität einer Reihenschaltung ist bestimmt nach dem schwächsten Glied der Reihe, so dass die Gesamtkapazität einer Akkublockanordnung nur deswegen einbrechen kann, weil eine einzelne Zelle der Reihenschaltung in ihrer Kapazität eingebrochen ist.

Es ist bekannt, in Akkublockanordnungen aus auf Lithium basierenden Einzelzellen (Lithium-Ionen, Lithium-Polymer oder dgl.) ein Batteriemanagementsystem vorzusehen, mit welchem die einzelnen Zellen nicht nur überwacht werden, sondern bei zurückgehender Leistung einzelner Zellen ausgleichend eingegriffen wird. Derartige Systeme werden auch Cell-Balancing-Systeme genannt.

Aus der DE 10 2008 021 090 A1 ist ein gattungsgemäßes Cell-Balancing-System bekannt, bei dem einem Akkublock ein Energieübertrager zugeordnet ist, über den einer beliebigen Zelle des überwachten Akkublocks elektrische Energie zuführbar ist, die aus allen anderen Zellen des gleichen Akkublocks entnommen wird. Hierzu ist eine Zelle des Akkublocks über ein Schaltelement mit einer Spule verbunden, die Teil des Energieübertragers ist. Über eine Eingangsschaltung wird dem Energieübertrager die elektrische Energie z. B. aus allen Zellen des Blocks zugeführt, welche dann über eine entsprechende Schaltung in eine schwache Zelle eingespeist wird.

Dieses bekannte Cell-Balancing-System arbeitet akkublockbezogen und gewährleistet, dass die in einem Akkublock zusammengeschalteten Akkuzellen gleichmäßig geladen und entladen werden, so dass der Akkublock über einen langen Zeitraum eine große Kapazität gewährleistet.

In einer Zusammenschaltung mehrerer Akkublocks zu einer Akkublockanordnung werden die einzelnen Akkublocks zwar ausgeglichen geladen, jedoch können sich die Ladungszustände von Akkublock zu Akkublock unterscheiden.

Anspruch 1 ist gegenüber US2010/0295510 A1 abgegrenzt.

Der Erfindung liegt die Aufgabe zugrunde, ein Cell-Balancing-System für eine Akkublockanordnung anzugeben, die unabhängig von der Anzahl der in Reihe oder parallel geschalteten Akkublöcke einen Ladungsausgleich aller inneren Zellen der einzelnen Akkublocks einer gesamten Akkublockanordnung gewährleistet.

Die Aufgabe wird bei einer Schaltungsanordnung nach dem Oberbegriff des Anspruchs 1 dadurch gelöst, dass die über die Eingangsschaltung dem Energieübertrager zugeführte elektrische Energie aus einem zweiten Akkublock der Akkublockanordnung zugeführt ist, wobei die an die Eingangsschaltung angelegte Spannung kleiner oder gleich der Spannung des zweiten Akkublocks ist.

Der Rückgriff auf die Energie eines zweiten, vorzugsweise benachbarten Akkublocks schafft die Möglichkeit, einen Ladungsausgleich nicht nur lokal in einem Akkublock vorzunehmen, sondern den Ladungsausgleich auch auf benachbarte Akkublocks auszudehnen, so dass bei entsprechender Verschaltung aller Akkublocks in einer Akkublockanordnung alle Akkublocks untereinander Ladung austauschen können. Die Ladung aus einem Akkublock kann kaskadenartig auf einen entfernten Akkublock verschoben werden, wobei die Ladung von Akkublock zu Akkublock weitergeschoben wird. Von besonderem Vorteil ist dabei, dass die aus dem zweiten Akkublock zugeführte Energie auf einem Potenziallevel liegt, der gleich oder kleiner der Akkuspannung ist. Die Verbindung von Akkublock zu Akkublock liegt somit in einem Spannungsbereich, der um ein Vielfaches kleiner ist als die Spannung der gesamten Akkublockanordnung.

Die Eingangsschaltung ist zweckmäßig als Parallelschaltung zu mindestens einer Zelle des zweiten Akkublocks ausgebildet; es kann zweckmäßig sein, die Eingangsschaltung als Parallelschaltung zu mehreren Zellen, insbesondere zu allen Zellen des zweiten Akkublocks auszubilden. Beiden Ausführungen ist gemeinsam, dass die Eingangsschaltung über nur eine Ausgleichsleitung mit dem zweiten, vorzugsweise benachbarten Akkublock verbunden sein muss, wobei die nur eine Ausgleichsleitung das Potenzial der dem Anschluss nächstliegenden Zelle an die Eingangsklemme der Eingangsschaltung des anderen Akkublocks weiterleitet oder aber das Potenzial des gesamten, zweiten, vorzugsweise benachbarten Akkublocks auf den ersten Akkublock aufschaltet.

Zur Steuerung des Ladungsausgleichs ist jedem Akkublock der Akkublockanordnung eine Steuereinheit zugeordnet, die die Schaltelemente im Bereich des Energieübertragers derart steuert, dass ein Energiefluss und damit ein bidirektionaler Ladungsausgleich in die eine oder andere Richtung möglich ist. Die Ladungsverschiebung ist also direkt oder indirekt in jede Zelle und aus jeder Zelle möglich.

Alle Steuereinheiten der Akkublöcke einer Akkublockanordnung sind über einen Datenbus miteinander verbunden, so dass jede Steuereinheit von dem Ladungszustand jeder einzelnen Zelle in den Akkublocks der Akkublockanordnung unmittelbar oder mittelbar Kenntnis hat. Somit kann jede Steuereinheit eine Energieübertragung zu dem von ihr überwachten Akkublock anfordern, so dass ein Ladungsausgleich von den stärksten Zellen zu den schwächsten Zellen in der gesamten Akkublockanordnung gewährleistet ist.

Der Energieübertrager ist zweckmäßig ein induktiver Energieübertrager. In dem ersten Akkublock ist parallel zu jeder inneren Zelle eine Reihenschaltung aus einer Spule und dem Schaltelement angeschlossen, wobei die Eingangsschaltung entsprechend aus einer Reihenschaltung, aus einer Spule und einem Schaltelement gebildet ist. Die den Zellen zugeordneten Spulen und die der Eingangsschaltung zugeordnete Spule sind magnetisch miteinander gekoppelt und bilden gemeinsam den Energieübertrager, der nach Art eines gemeinsamen Transformators ausgebildet sein kann.

Von besonderem Vorteil ist, dass die konstruktive Gestaltung des Energieübertragers auf einen Akkublock abgestellt und für jeden Akkublock immer gleich ist, unabhängig von der Verwendung des Akkublocks in kleineren oder größeren Anlagen und unabhängig von der Kapazität eines Akkublocks oder einer Akkublockanordnung. Der als Transformator ausgebildete Energieübertrager hat der Zellenanzahl in einem Akkublock entsprechende Spulenabgriffe für die einzelnen Zellspannungen und einen Spulenabgriff zum Anlegen der Blockspannung des Akkublocks. Erfindungsgemäß ist nun ein weiterer Spulenabgriff vorgesehen, der mit der Ausgleichsleitung des zweiten, bevorzugt benachbarten Akkublocks in der Akkublockanordnung verbunden ist und ein Potenzial in der Größe oder kleiner der Akkublockspannung des benachbarten Akkublocks aufschaltet. Wird jeder Akkublock einer Akkublockanordnung mit einem benachbarten Akkublock über eine Ausgleichsleitung verbunden und ist dieser wiederum mit einem weiteren benachbarten Akkublock über eine weitere Ausgleichsleitung verbunden usw., so ergibt sich eine ununterbrochene Verkettung aller Akkublocks einer Akkublockanordnung, so dass aus jedem beliebigen Akkublock und jeder beliebigen Zelle direkt oder indirekt Ladung auf jede beliebige Zelle in jeden beliebigen Akkublock innerhalb der gesamten Akkublockanordnung verschoben werden kann.

Nach einem erfindungsgemäßen Verfahren erfolgt die Verschiebung der Ladung zwischen einer Ausgangszelle in einem zweiten Akkublock und einer Zielzelle in einem ersten Akkublock in einer Akkublockanordnung derart über einen zwischen den Zellen angeordneten Energieübertrager, dass dem Energieübertrager zunächst Energie aus zumindest einer Ausgangszelle eines zweiten Akkublocks zugeführt wird, und die zugeführte Energie von dem Energieübertrager parallel in mehrere Zellen des ersten Akkublocks eingespeist wird, und dass dann die Energie aus den mehreren Zellen des ersten Akkublocks dem Energieübertrager zugeführt und aus diesem in die Zielzelle des ersten Akkublocks geladen wird. Dieses Verfahren hat den Vorteil, dass ohne weiteren schaltungstechnischen Aufwand eine polrichtige Aufschaltung der induzierten Spannung auf die Zelle oder Zellen möglich ist.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Darstellung eine Akkublockanordnung aus einer Vielzahl einzelner Akkublocks mit einer Blockspannung,
- Fig. 2: in schematischer Darstellung eine einem Akkublock zugeordnete Schaltungsanordnung zum Ladungsausgleich zwischen inneren Zellen des Akkublocks,
- Fig. 3: eine Darstellung gemäß Fig. 2 als weiteres Ausführungsbeispiel einer Schaltungsanordnung zum Ladungsausgleich.

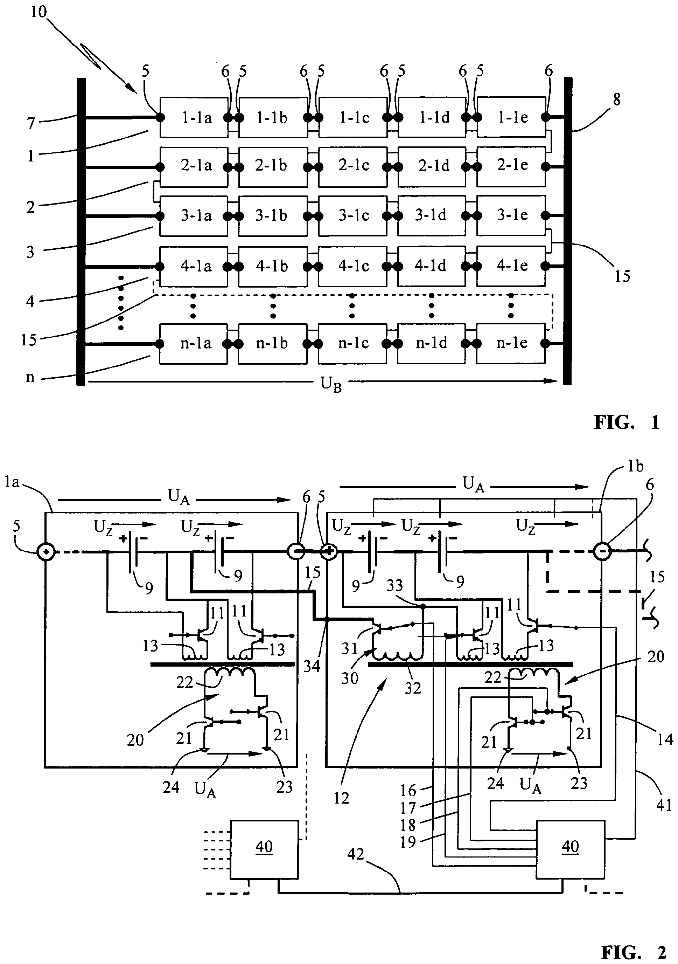

Die in Fig. 1 dargestellte Akkublockanordnung 10 besteht aus einer Vielzahl von in einer Reihe geschalteten einzelnen Akkublöcken 1 a, 1b, 1c, 1d, 1e. Im gezeigten Ausführungsbeispiel sind mehrere Reihen 1, 2, 3, 4 bis n von in Reihe geschalteten Akkublöcken 1a, 1b, 1c, 1d, 1e vorgesehen, wobei jede Reihe 1 bis n mit den freien Anschlussklemmen 5, 6 der äußeren Akkublöcke mit Sammelschienen 7, 8 der Akkublockanordnung 10 verbunden sind. Zwischen den Sammelschienen 7, 8 liegt die Blockspannung U_{B} der Akkublockanordnung, die durch die Reihenschaltung der Akkublöcke 1a, 1b, 1c, 1d, 1e bestimmt ist. Die Größe der Blockspannung ist abhängig von der Anzahl der in Reihe geschalteten Akkublöcke und kann z. B. 200 Volt bis 900 Volt oder auch mehr betragen. Die Spannung eines Akkublocks liegt entsprechend niedriger, z. B. im Bereich von 30 bis 60 Volt. Werden in einem Akkublock chemisch auf Lithium basierende Zellen verwendet, z. B. LiIon-Zellen, liegt die Zellspannung U_{C} etwa um 3,8 bis 4,2 Volt.

Eine Reihenschaltung des Ausführungsbeispiels umfasst Akkublöcke 1a, 1b, 1c, 1d und 1e. Zur Unterscheidung der Akkublöcke unterschiedlicher Reihen ist jeweils die Reihennummer vorangestellt. So sind die Akkublöcke der ersten Reihe 1 mit 1-1a, 1-1b, 1-1c, 1-1d und 1-1e bezeichnet; entsprechend umfasst die zweite Reihe 2 die Reihenschaltung der Akkublöcke 2-1a, 2-1b, 2-1c, 2-1d und 2-1e. Die dritte Reihe 3 umfasst die Akkublöcke 3-1a, 3-1b, 3-1c, 3-1d und 3-1e und die vierte Reihe 4 die Akkublöcke 4-1a, 4-1b, 4-1c, 4-1d, 4-1e. Die letzte Reihe n umfasst die Akkublöcke n-1a, n-1b, n-1c, n-1d und n-1e.

Jeder Akkublock 1 besteht aus einer Vielzahl innerer Zellen 9, die in Reihe - wie im Ausführungsbeispiel - und/oder auch parallel geschaltet sein können.

Wie am Beispiel der Akkublöcke 1a und 1b in Fig. 2 dargestellt, ist jeder Akkublock 1b über seine äußeren Anschlussklemmen 5, 6 mit einem in Reihe folgenden Akkublock 1a elektrisch verbunden. Jede Zelle 9 eines Akkublocks ist über ein Schaltelement 11 mit einem jeweils dem einzelnen Akkublock zugeordneten Energieübertrager 12 verbunden. Im gezeigten Ausführungsbeispiel ist der Energieübertrager 12 ein induktiver Energieübertrager. Zu jeder Zelle 9 eines Akkublocks liegt eine Reihenschaltung aus einer Spule 13 und dem Schaltelement 11. Der Energieübertrager 12 weist ferner zumindest eine Gesamtschaltung 20 auf, die aus zumindest einem Schaltelement 21 und einer Spule 22 besteht. Die Gesamtschaltung 20 in Fig. 2 liegt mit ihren Eingangsklemmen 23, 24 an der Akkuspannung U_{A} des zugeordneten Akkublocks, wie in Fig. 2 rechts dargestellt.

Gemäß der Erfindung ist der Energieübertrager 12 des einzelnen Akkublocks 1b mit einer Eingangsschaltung 30 versehen, die aus zumindest einer Spule 32 und einem in Reihe liegenden Schaltelement 31 besteht. Die Reihenschaltung aus Spule 32 und Schaltelement 31 liegt parallel zu zumindest einer Zelle 9 eines zweiten, vorzugsweise benachbarten Akkublocks 1a, also eines in der Reihe liegenden weiteren Akkublocks 1a der Akkublockanordnung 10. Um die Reihenschaltung der Eingangsschaltung 30 zweckmäßig elektrisch anzuschließen, liegt deren eine Eingangsklemme 33 im Gehäuse des ersten Akkublocks 1b an der Anschlussklemme 5 und die andere Eingangsklemme 34 an einer äußeren Ausgleichsleitung 15 des zweiten Akkublocks 1a, die das Potenzial der ersten Zelle 9 des zweiten Akkublocks 1a dem ersten Akkublock 1b zuführt. Zwischen den Akkublocks 1a, 1b und den weiteren Akkublocks der Anordnung 10 ist somit neben der elektrischen Verbindung über die Anschlussklemmen 5 und 6 eine Ausgleichsleitung 15 vorgesehen, die ein Potenzial gleich oder kleiner einer Akkuspannung U_{A} des benachbarten Akkublocks 1a dem ersten Akkublock 1b und deren Eingangsschaltung 30 zuführt. Eine oder mehrere Zellen 9 des zweiten Akkublocks 1a sind somit einerseits mit dem in dem zweiten Akkublock 1a angeordneten Energieübertrager 12 verbunden und parallel dazu mit dem Energieübertrager 12 eines benachbarten Akkublocks, im Ausführungsbeispiel mit dem ersten Akkublock1b.

Wie in Fig. 2 rechts dargestellt, sind die Steueranschlüsse 16, 17, 18 der Schaltelemente 21 und 31 von einer elektronischen Steuereinheit 40 angesteuert, die auch die Steueranschlüsse 14 und 19 der Schaltelemente 11 ansteuert, die in den Parallelschaltungen zu den einzelnen Zellen 9 vorgesehen sind.

Die den Zellen 9 zugeordneten Spulen 13 und die der Gesamtschaltung 20 und der Eingangsschaltung 20 zugeordneten Spulen 22, 32 sind miteinander gekoppelt, insbesondere durch einen weichmagnetischen Kern miteinander gekoppelt. Die den Zellen 9 zugeordneten Spulen 13 und die den Schaltungen zugeordneten Spulen 22 und 32 bilden vorteilhaft einen Transformator, der eine bidirektionale Energieübertragung von der Gesamtspule 22 zu einer Zellspule 13 des Transformators ebenso ermöglicht, wie die Energieübertragung von einer Zellspule 13 auf die Gesamtspule 22. Über die Eingangsspule 32 der Eingangsschaltung 30 wird ferner das Potenzial eines anderen, externen Akkublocks aufgeschaltet, so dass das Potenzial einer oder mehrerer Zellen 9 des zweiten Akkublocks 1a in den Energieübertrager 12 des ersten Akkublocks 1b eingekoppelt ist. Mit der Eingangsspule 32 kann somit Energie aus dem benachbarten zweiten Akkublock 1a in einem ersten Schritt über die Gesamtspule 22 in alle Zellen 9 des ersten Akkublocks 1b übertragen werden, um dann in einem zweiten Schritt Energie aus allen Zellen 9 über die Gesamtspule 22 und die jeweils eingeschaltete Zellspule 13 in eine Zielzelle des ersten Akkublocks 1b zu laden.

Die Schaltungsanordnung zum Austausch elektrischer Ladung zwischen den inneren Zellen eines Akkublocks gemäß Fig. 2 arbeitet schematisch wie folgt:
Stellt - beim Lade- wie beim Entladevorgang als auch im Ruhezustand - die elektronische Steuereinheit 40 unterschiedliche Potenziale der Zellen 9 innerhalb eines ersten Akkublocks 1b fest, was über eine entsprechende Messleitung 41 erfolgen kann, wird der Energieübertrager 12 in Betrieb genommen.

Wird z. B. bei der der Anschlussklemme 5 benachbarten Zelle 9 innerhalb des ersten Akkublocks 1b eine zu geringe Zellspannung U_{C} festgestellt, was auf einen niedrigen Ladezustand hinweist, kann die Steuereinheit 40 in Abhängigkeit der empfangenen Messwerte entscheiden, ob z. B. aus einer stärkeren inneren Zelle 9 des gleichen ersten Akkublocks 1b Energie in die schwache Zielzelle des ersten Akkublocks 1b verschoben werden soll oder Energie aus einem benachbarten Akkublock 1a in die schwache Zielzelle zu verschieben ist.

Soll innerhalb des ersten Akkublocks 1b Ladung verschoben werden, wird zunächst in einem ersten Schritt das entsprechende Schaltelement 11 der stärker geladenen inneren Ausgangszelle eingeschaltet, so dass über die angeschlossene Spule 13 ein Strom fließt, der aufgrund der magnetischen Kopplung des Energieübertragers 12 in der Gesamtspule 22 zu einer entsprechenden induzierten Spannung führt, die durch Schließen eines Schaltelementes 21 der Gesamtanordnung aller Zellen 9 des ersten Akkublocks 1b aufgeschaltet wird. Die Ladung der Ausgangsspule wird somit zunächst in alle Zellen des Akkublocks der Ausgangszelle verschoben. Nach Abschluss des ersten Schrittes wird in einem zweiten Schritt der Gesamtschaltung 20 die Akkuspannung U_{A} aufgeschaltet und das Schaltelement 13 der Zielzelle geschlossen, so dass eine Gesamtladungsmenge aus allen Zellen des Akkublocks in die Zielzelle des gleichen Akkublocks verschoben wird. Über den Energieübertrager (Transformator) kann auf diese Weise Ladung aus einer stärkeren Ausgangszelle entnommen und in die schwächere Zielzelle des gleichen Akkublocks verschoben werden. Dabei arbeitet die Energieübertragung sowohl in die eine wie in die andere Richtung, ist also bidirektional.

Nach der Erfindung ist durch die Anordnung der Eingangsschaltung 30 die Möglichkeit geschaffen, Ladung aus einer in der Reihe benachbarten Akkublocks 1a heranzuführen und in die schwächere innere Zielzelle des ersten Akkublocks 1b einzuspeisen. Hierzu werden zunächst der Schaltkontakt 31 der Eingangsschaltung 30 und entsprechend ein Schaltkontakt 21 der Gesamtschaltung 20 geschlossen, so dass die aus einer oder mehreren Zellen 9 des zweiten Akkublocks 1a dem Energieübertrager 12 des ersten Akkublocks 1b zugeführte Ladungsmenge zunächst in alle Zellen des ersten Akkublocks 1b umgeladen wird. Wie vorstehend ausgeführt, wird dann in einem zweiten Schritt die Akkuspannung U_{A} auf die Gesamtspule 22 aufgeschaltet und das entsprechende Schaltelement 13 der Zielzelle geschlossen, so dass die dem Akkublock 1a entnommene Ladungsmenge der Zielzelle zugeführt wird. Die Schaltungsanordnung zum Austausch der elektrischen Ladung zwischen den inneren Zellen eines Akkublocks arbeitet somit nicht nur begrenzt auf einen Akkublock bezogen, sondern kann aufgrund der erfindungsgemäßen Anordnung einer Eingangsschaltung 30, die aus einem benachbarten Akkublock 1a gespeist ist, nunmehr über die Grenzen eines einzelnen Akkublocks 1b hinaus Ladung zwischen allen Zellen einer größeren Akkublockanordnung, z. B. 10, 20 oder mehr Akkublöcken verschieben. Hierzu ist lediglich eine einzige elektrische Ausgleichsleitung 15 zwischen benachbarten Akkublöcken notwendig, um die Spannung einer oder mehrerer Zellen 9 eines benachbarten Akkublocks 1a oder dessen Akkuspannung U_{A} der Eingangsschaltung 30 im ersten Akkublock 1b zuzuführen. Der Verdrahtungsaufwand zwischen den Akkublocks 1a, 1b, 1c usw. einer Akkublockanordnung 10 ist somit gering, wobei das auf der Ausgleichsleitung 15 liegende Potenzial zwischen der Akkuspannung U_{A} und einer Zellspannung U_{C} liegt.

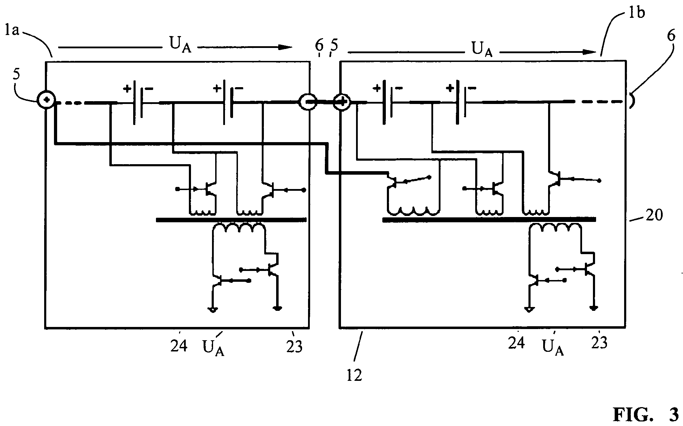

Im Ausführungsbeispiel nach Fig. 2 ist eine Schaltungsanordnung gezeigt, bei der die zweite Eingangsschaltung 30 parallel zu einer Zelle 9 des benachbarten, zweiten Akkublocks 1a liegt. Im Ausführungsbeispiel nach Fig. 3 ist die zweite Eingangsschaltung 30 derart angeschlossen, dass die gesamte Akkublockspannung U_{A} des zweiten, vorzugsweise benachbarten Akkublocks 1a aufgeschaltet ist, wodurch in gleicher Zeiteinheit größere Energiemengen verschoben werden können.

Der prinzipielle Aufbau der Schaltungsanordnung nach Fig. 3 entspricht dem in Fig. 2, weshalb für gleiche Teile gleiche Bezugszeichen verwendet sind.

In Fig. 1 ist dargestellt, dass die Ausgleichsleitung 15 zwischen benachbarten Zellen dazu führt, dass mittelbar über die Ausgleichsleitung 15 und die einzelnen Energieübertrager 12 alle Akkublöcke einer Akkublockanordnung 10 miteinander in Verbindung stehen, so dass Energie bzw. Ladung aus jedem einzelnen Akkublock und jeder einzelnen Zelle 9 der Akkublockanordnung in jede beliebige Zelle 9 jedes Akkublocks der Akkublockanordnung 10 verschoben werden kann. Damit ist gewährleistet, dass in jedem Betriebszustand eine weitgehend gleichmäßige Entladung aller Zellen 9 erreicht wird, was sowohl die Lebensdauer jeder einzelnen Zelle begünstigt als auch die Kapazität der Akkublockanordnung über einen langen Zeitraum erhält.

Um einen effizienten Ladungsausgleich zwischen allen Akkublocks der Akkublockanordnung zu gewährleisten, sind die den einzelnen Akkublocks zugeordneten Steuereinheiten 40 zur Steuerung des angeschlossenen Energieübertragers 12 über einen Datenbus 42 miteinander verbunden.

## Patentansprüche

1. Schaltungsanordnung zum Austausch elektrischer Ladung zwischen den Zellen (9) eines Akkublocks, wobei der Akkublock über seine äußeren Anschlussklemmen (5, 6) mit einer Vielzahl von Akkublöcken (1a, 1b, 1c, 1c, 1e) in einer Akkublockanordnung (10) zusammengeschaltet ist, mit einem in einem ersten Akkublock (1b) angeordneten Energieübertrager (12) der Schaltungsanordnung, wobei über den Energieübertrager (12) einer beliebigen Zelle (9) des ersten Akkublocks (1b) elektrische Energie zuführbar ist, wozu eine Zelle (9) des ersten Akkublocks (1b) über ein Schaltelement (11) der Schaltungsanordnung mit dem Energieübertrager (12) verbunden ist, und mit einer Eingangsschaltung (30) der Schaltungsanordnung, über die elektrische Energie in den Energieübertrager (12) übertragen wird, wobei die Eingangsschaltung (30) über ein Schaltelement (31) mit dem Energieübertrager (12) verbunden ist,
**dadurch gekennzeichnet, dass** die über die Eingangsschaltung (30) zugeführte elektrische Energie aus zumindest einer Zelle (9) des zweiten Akkublocks (1a) der Akkublockanordnung (10) über eine Ausgleichsleitung (15) zugeführt ist und die an die Eingangsschaltung (30) angelegte Spannung kleiner oder gleich der Spannung (U_{A}) des zweiten Akkublocks (1a) ist.

2. Schaltungsanordnung nach Anspruch 1,
**dadurch gekennzeichnet, dass** die Eingangsschaltung (30) als Parallelschaltung zu mindestens einer Zelle (9) des zweiten Akkublocks (1a) ausgebildet ist.

3. Schaltungsanordnung nach Anspruch 1,
**dadurch gekennzeichnet, dass** die Eingangsschaltung (30) als Parallelschaltung zu mehreren Zellen (9), insbesondere zu allen Zellen (9) des zweiten Akkublocks (1a) ausgebildet ist.

4. Schaltungsanordnung nach einem der Ansprüche 1 bis 3,
**dadurch gekennzeichnet, dass** die Eingangsschaltung (30) über nur eine Ausgleichsleitung (15) mit dem Potenzial des benachbarten Akkublocks (1a) verbunden ist.

5. Schaltanordnung nach einem der Ansprüche 2 bis 4,
**dadurch gekennzeichnet, dass** die Parallelschaltung mit einer Eingangsklemme (33) an einer Anschlussklemme (5) des ersten Akkublocks (1b) und mit einer zweiten Eingangsklemme (34) mit der Ausgleichsleitung (15) des zweiten Akkublocks (1a) verbunden ist.

6. Schaltungsanordnung nach einem der Ansprüche 1 bis 5,
**dadurch gekennzeichnet, dass** jedem Akkublock (1a, 1b, ...) der Akkublockanordnung (10) eine Steuereinheit (40) zur Steuerung der Schaltelemente (11, 21, 31) in dem zugeordneten Akkublock (1b) zugeordnet ist.

7. Schaltungsanordnung nach Anspruch 6,
**dadurch gekennzeichnet, dass** die Steuereinheiten (40) der Akkublocks (1) einer Akkublockanordnung (10) miteinander über einen Datenbus (42) miteinander verbunden sind und kommunizieren.

8. Schaltungsanordnung nach einem der Ansprüche 1 bis 7,
**dadurch gekennzeichnet, dass** der Energieübertrager (12) ein induktiver Energieübertrager ist.

9. Schaltungsanordnung nach einem der Ansprüche 1 bis 8,
**dadurch gekennzeichnet, dass** in dem ersten Akkublock (1b) parallel zu jeder inneren Zelle (9) eine Reihenschaltung aus einer Spüle (13) und einem Schaltelement (11) angeschlossen ist.

10. Schaltungsanordnung nach einem der Ansprüche 1 bis 9,
**dadurch gekennzeichnet, dass** die Eingangschaltung (30) aus einer Reihenschaltung einer Spule (32) und einem Schaltelement (31) gebildet ist.

11. Schaltungsanordnung nach Anspruch 9 und 10,
**dadurch gekennzeichnet, dass** die den Zellen (9) zugeordneten Spulen (13) und die der Eingangsschaltung (30) zugeordnete Spule (32) miteinander magnetisch gekoppelt sind.

12. Schaltungsanordnung nach Anspruch 11,
**dadurch gekennzeichnet, dass** die den Zellen (9) zugeordneten Spulen (13) und die einer Eingangsschaltung (30) zugeordnete Spule (32) einen gemeinsamen Transformator bilden.

13. Verfahren zum Austausch elektrischer Ladung zwischen einer Ausgangszelle (9) in einem zweiten Akkublock (1a) und einer Zielzelle (9) in einem ersten Akkublock (1b), wobei die Akkublöcke (1a, 1b) über äußere Anschlussklemmen (5, 6) mit einer Vielzahl anderer Akkublöcke (1c, 1c, 1e) in einer Akkublockanordnung (10) zusammengeschaltet sind, und mit einem zwischen den Zellen (9) angeordneten Energieübertrager (12), wobei dem Energieübertrager (12) zunächst Energie aus zumindest einer Ausgangszelle (9) eines zweiten Akkublocks (1b) über eine Ausgleichsleitung (15) zugeführt wird,
und die zugeführte Energie von dem Energieübertrager parallel in mehrere Zellen (9) des ersten Akkublocks (1b) eingespeist wird, und dass dann die Energie aus den mehreren Zellen (9) des ersten Akkublocks (1b) dem Energieübertrager (12) zugeführt und aus diesem in die Zielzelle (9) des ersten Akkublocks (1b) geladen wird.

14. Verfahren nach Anspruch 13,
**dadurch gekennzeichnet, dass** die mehreren Zellen (9) alle Zellen des ersten Akkublocks (1b) umfassen.

## Claims

1. Circuit assembly for exchanging electric charge between the cells (9) of a battery block, the battery block being interconnected via its external connecting terminals (5, 6) with a plurality of battery blocks (1a, 1b, 1c, 1c, 1e) in a battery block assembly (10), the circuit assembly comprising an energy transmitter (12) located in a first battery block (1b), wherein electric energy can be supplied via the energy transmitter (12) of any cell (9) of the first battery block (1b), for which purpose a cell (9) of the battery block (1b) is connected to the energy transmitter (12) via a switching element (11) of the circuit assembly, and the circuit assembly further comprising an input circuit (30), via which electric energy is transmitted into the energy transmitter (12), wherein the input circuit (30) is connected to the energy transmitter (12) via a switching element (31),
**characterised in that** the electric energy supplied via the input circuit (30) from at least one cell (9) of the second battery block (1a) of the battery block assembly (10) is supplied via an equalising line (15), and **in that** the voltage applied to the input circuit (30) is less than or equal to the voltage (U_{A}) of the second battery block (1a).

2. Circuit assembly according to claim 1,
**characterised in that** the input circuit (30) is designed as a parallel circuit to at least one cell (9) of the second battery block (1a).

3. Circuit assembly according to claim 1,
**characterised in that** the input circuit (30) is designed as a parallel circuit to several cells (9), in particular to all cells (9), of the second battery block (1a).

4. Circuit assembly according to any of claims 1 to 3,
**characterised in that** the input circuit (30) is connected to the potential of the adjacent battery block (1a) via one equalising line (15) only.

5. Circuit assembly according to any of claims 2 to 4,
**characterised in that** the parallel circuit is connected with input terminal (33) to a connecting terminal (5) of the first battery block (1b) and with a second input terminal (34) to the equalising line (15) of the second battery block (1a).

6. Circuit assembly according to any of claims 1 to 5,
**characterised in that** a control unit (40) for controlling the switching elements (11, 21, 31) in the associated battery block (1b) is assigned to each battery block (1a, 1b ...) of the battery block assembly (10).

7. Circuit assembly according to claim 6,
**characterised in that** the control units (40) of the battery blocks (1) of a battery block assembly (10) are connected to and communicate with one another via a data bus (42).

8. Circuit assembly according to any of claims 1 to 7,
**characterised in that** the energy transmitter (12) is an inductive energy transmitter.

9. Circuit assembly according to any of claims 1 to 8,
**characterised in that** a series circuit of a coil (13) and a switching element (11) is connected in parallel with each inner cell (9) in the first battery block (1b).

10. Circuit assembly according to any of claims 1 to 9,
**characterised in that** the input circuit (30) is formed from a series circuit of a coil (32) and a switching element (31).

11. Circuit assembly according to claims 9 and 10,
**characterised in that** the coils (13) assigned to the cells (9) and the coil (32) assigned to the input circuit (30) are magnetically coupled to one another.

12. Circuit assembly according to claim 11,
**characterised in that** the coils (13) assigned to the cells (9) and the coil (32) assigned to the input circuit (30) form a common transformer.

13. Method for exchanging electric charge between an output cell (9) in a second battery block (1a) and a target cell (9) in a first battery block (1b), wherein the battery blocks (1a, 1b) are connected via external connecting terminals (5, 6) to a plurality of other battery blocks (1c, 1c, 1e) to form a battery block assembly (10) and comprise an energy transmitter (12) located between the cells (9), wherein the energy transmitter (12) is first supplied with energy from at least one output cell (9) of a second battery block (1b) via an equalising line (15) and the supplied energy is fed by the energy transmitter in parallel into several cells (9) of the first battery block (1b), and wherein the energy is then supplied from the several cells (9) of the first battery block (1b) to the energy transmitter (12) and from this charged into the target cell (9) of the first battery block (1b).

14. Method according to claim 13,
**characterised in that** the several cells (9) include all cells of the first battery block (1b).

## Revendications

1. Dispositif de circuit pour l'échange d'une charge électrique entre les éléments (9) d'une batterie, la batterie étant interconnectée par l'intermédiaire de ses bornes extérieures (5, 6) avec une multiplicité de batteries (1a, 1b, 1c, 1c, 1e) dans un dispositif de batterie (10), avec un transporteur d'énergie (12) du dispositif de circuit disposé dans une première batterie (1b), de l'énergie électrique pouvant être amenée par l'intermédiaire du transporteur d'énergie (12) d'un élément (9) quelconque de la première batterie (1b), un élément (9) de la première batterie (1b) étant relié pour cela par l'intermédiaire d'un élément de commutation (11) du dispositif de circuit au transporteur d'énergie (12), et avec un circuit d'entrée (30) du dispositif de circuit, par l'intermédiaire duquel de l'énergie électrique est transmise au transporteur d'énergie (12), le circuit d'entrée (30) étant relié par l'intermédiaire d'un élément de commutation (31) au transporteur d'énergie (12), **caractérisé en ce que** l'énergie électrique amenée par l'intermédiaire du circuit d'entrée (30) est amenée à partir d'au moins un élément (9) de la deuxième batterie (la) du dispositif de batterie (10) par l'intermédiaire d'une ligne d'équilibrage (15), et la tension appliquée au circuit d'entrée (30) est inférieure ou égale à la tension (U_{A}) de la deuxième batterie (1a).

2. Dispositif de circuit selon la revendication 1,
**caractérisé en ce que** le circuit d'entrée (30) est conçu comme un montage en parallèle par rapport à au moins un élément (9) de la deuxième batterie (1a).

3. Dispositif de circuit selon la revendication 1,
**caractérisé en ce que** le circuit d'entrée (30) est conçu comme un montage en parallèle par rapport à plusieurs éléments (9), en particulier tous les éléments (9) de la deuxième batterie (1a).

4. Dispositif de circuit selon l'une des revendications 1 à 3,
**caractérisé en ce que** le circuit d'entrée (30) n'est relié que par l'intermédiaire d'une ligne d'équilibrage (15) au potentiel de la batterie (la) voisine.

5. Dispositif de circuit selon l'une des revendications 2 à 4,
**caractérisé en ce que** le montage en parallèle est relié avec une borne d'entrée (33) à une borne (5) de la première batterie (1b), et avec une deuxième borne d'entrée (34) à la ligne d'équilibrage (15) de la deuxième batterie (1a).

6. Dispositif de circuit selon l'une des revendications 1 à 5,
**caractérisé en ce qu'**à chaque batterie (1a, 1b,...) du dispositif de batterie (10) est associée une unité de commande (40) pour la commande des éléments de commutation (11, 21, 31) dans la batterie (1b) associée.

7. Dispositif de circuit selon la revendication 6,
**caractérisé en ce que** les unités de commande (40) des batteries (1) d'un dispositif de batterie (10) sont reliées et communiquent entre elles par l'intermédiaire d'un bus de données (42).

8. Dispositif de circuit selon l'une des revendications 1 à 7,
**caractérisé en ce que** le transporteur d'énergie (12) est un transporteur d'énergie inductif.

9. Dispositif de circuit selon l'une des revendications 1 à 8,
**caractérisé en ce que** dans la première batterie (1b), parallèlement à chaque élément intérieur (9), est raccordé un montage en série composé d'une bobine (13) et d'un élément de commutation (11).

10. Dispositif de circuit selon l'une des revendications 1 à 9,
**caractérisé en ce que** le circuit d'entrée (30) se compose d'un montage en série d'une bobine (32) et d'un élément de commutation (31).

11. Dispositif de circuit selon les revendications 9 et 10,
**caractérisé en ce que** les bobines (13) associées aux éléments (9) et la bobine (32) associée au circuit d'entrée (30) sont couplées magnétiquement.

12. Dispositif de circuit selon la revendication 11,
**caractérisé en ce que** les bobines (13) associées aux éléments (9) et la bobine (32) associée à un circuit d'entrée (30) forment un transformateur commun.

13. Procédé pour l'échange d'une charge électrique entre un élément de départ (9) dans une deuxième batterie (la), et un élément cible (9) dans une première batterie (1b), les batteries (1a, 1b) étant interconnectées par l'intermédiaire de bornes extérieures (5, 6) avec une multiplicité d'autres batteries (1c, 1c, 1e) dans un dispositif de batterie (10), et avec un transporteur d'énergie (12) disposé entre les éléments (9), de l'énergie étant tout d'abord amenée dans le transporteur d'énergie (12) à partir d'au moins un élément de départ (9) d'une deuxième batterie (1b) par l'intermédiaire d'une ligne d'équilibrage (15), et l'énergie amenée étant introduite par le transporteur d'énergie parallèlement dans plusieurs éléments (9) de la première batterie (1b), et en ce que l'énergie est ensuite amenée, à partir de ces éléments (9) de la première batterie (1b), dans le transporteur d'énergie (12) et est chargée, à partir de celui-ci, dans l'élément cible (9) de la première batterie (1b).

14. Procédé selon la revendication 13,
**caractérisé en ce que** ces éléments (9) comprennent tous les éléments de la première batterie (1b).
